# EUROPÄISCHE PATENTSCHRIFT

(11) **EP 4 268 558 B1**
(45) Veröffentlichungstag und Bekanntmachung des Hinweises auf die Patenterteilung: **08.04.2026**
(21) Anmeldenummer: 23155777.8
(22) Anmeldetag: 09.02.2023
(51) Int. Cl.: A01B 69/04, A01B 79/00, A01D 41/127

(54) **ASSISTENZSYSTEM ZUR GENERIERUNG VON ROUTENPLÄNEN FÜR AUTONOME LANDWIRTSCHAFTLICHE ARBEITSMASCHINEN**
ASSISTANCE SYSTEM FOR GENERATING ROUTE PLANS FOR AUTONOMOUS AGRICULTURAL MACHINES
SYSTÈME D'ASSISTANCE POUR GÉNÉRER DES PLANS DE ROUTE POUR DES MACHINES AGRICOLES AUTONOMES

(30) Priorität: 27.04.2022 DE 102022110127
(43) Veröffentlichungstag der Anmeldung: 01.11.2023
(73) Patentinhaber: CLAAS Selbstfahrende Erntemaschinen GmbH, 33428 Harsewinkel (DE)
(72) Erfinder: Mähler, Reinhold, 33378 Rheda-Wiedenbrück (DE); Ehlert, Christian, 33719 Bielefeld (DE); Bormann, Bastian, 33334 Gütersloh (DE); Baumgarten, Joachim, 48361 Beelen (DE); Neitemeier, Dennis, 59510 Lippetal (DE); Witte, Johann, 58730 Fröndenberg (DE); Redenius, Jannik, 32361 Pr. Oldendorf (DE); Bohl, Arne, 33330 Gütersloh (DE); Nacke, Dr., Eberhard, 33332 Gütersloh (DE); Apke, Christoph, 33659 Bielefeld (DE); Korthals, Timo, 33818 Leopoldshöhe (DE); Thiesmann, Waldemar, 49080 Osnabrück (DE); Schröder, Axel, 33332 Gütersloh (DE); Monkenbusch, Robin, 33378 Rheda-Wiedenbrück (DE)
(74) Vertreter: CLAAS Gruppe

(56) Entgegenhaltungen:
- EP-A1- 2 174 537
- EP-A2- 1 602 267
- EP-B1- 3 299 996
- WO-A1-2020/262416
- US-A1- 2012 029 732
- US-A1- 2020 326 674

## Beschreibung

Die vorliegende Erfindung betriff ein auf elektronischem Datenaustausch basierendes Assistenzsystem zur Generierung von Routenplänen für autonome landwirtschaftliche Arbeitsmaschinen.

In der modernen Landwirtschaft sind vermehrt Bestrebungen dahingehend zu erkennen, Arbeitseinsätze autonom durchzuführen, um die Produktivität und Wirtschaftlichkeit der Prozesse zu erhöhen. Hierfür kommen sogenannte autonome landwirtschaftliche Arbeitsmaschinen zum Einsatz, die sich dadurch auszeichnen, dass kein Bediener in einer Kabine zur Steuerung derselben vorhanden ist bzw. sein muss. Demnach steht bei autonomen landwirtschaftlichen Arbeitsmaschinen kein Bediener zur Verfügung, der einen durchzuführenden landwirtschaftlichen Arbeitsablauf mit einer Abfolge von verschiedenen Arbeitsschritten kennt und einzelne Steuerfunktionen während des Betriebs der Arbeitsmaschine auf einem landwirtschaftlichen Feld ausführen bzw. beauftragen kann. Derartige autonome landwirtschaftliche Arbeitsmaschinen werden daher auch als unbemannte landwirtschaftliche Arbeitsmaschinen bezeichnet.

Aus dem Stand der Technik, z.B. EP 2 174 537 A1, US 2012/0029732 A1 und WO 2020/262416 A1, sind bereits Systeme zur Führung von Fahrzeugen bekannt, die ein autonomes Abfahren einer Route auf den landwirtschaftlichen Feld durch bemannte Arbeitsmaschinen erlauben.

Die DE 10 2016 121 523 A1 beschreibt ein Verfahren zum prädiktiven Erzeugen von Daten zur Steuerung eines Fahrweges und eines Betriebsablaufes für landwirtschaftliche Fahrzeuge und Maschinen, wobei auch Handlungen des Bedieners notwendig sind, wenn keine unmittelbare Gefahr besteht.

Zwar können solche bemannten Fahrzeuge durch Systeme entlang einer Wegstrecke autonom bewegt werden, allerdings sind für die Ausführung einiger Steuerfunktionen zur Durchführung von Arbeitsschritten während die Route abgefahren wird, Eingaben seitens eines Bedieners notwendig, der sich in der Kabine der Arbeitsmaschine befindet, so dass beispielsweise an die Arbeitsmaschine adaptierte Arbeitsaggregate angehoben oder abgesenkt werden, wie bei einer Fahrt im Vorgewende.

Autonome landwirtschaftliche Arbeitsmaschinen verfügen allerdings nicht über einen solchen Bediener, der Kenntnisse über den auszuführenden landwirtschaftlichen Arbeitsablauf mit allen Arbeitsschritten hat. Vielmehr sind die autonomen landwirtschaftlichen Arbeitsmaschinen an und für sich erst einmal nicht dazu in der Lage, einen Arbeitsschritt auszuführen, solange sie keine Daten hierzu erlangt haben, die die autonome landwirtschaftliche Arbeitsmaschine dazu befähigen, den Arbeitsschritt oder mehrere Arbeitsschritte eines landwirtschaftlichen Arbeitsablaufs durchzuführen.

Der vorliegenden Erfindung liegt die Aufgabe zugrunde, eine Ausführungsform eines Assistenzsystems zur Generierung von Routenplänen für autonome landwirtschaftliche Arbeitsmaschinen anzugeben, wobei insbesondere eine verbesserte und/oder optimierte Qualität des geernteten Gutes während einer Ernte mit einer autonomen landwirtschaftlichen Arbeitsmaschine ermöglicht wird.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass Fahrrouten für autonome landwirtschaftliche Arbeitsmaschinen zusätzlich und/oder alternativ Qualitätskriterien des zu erntenden Gutes berücksichtigen.

Das erfindungsgemäße Assistenzsystem basiert auf einem elektronischen Datenaustausch und ist zur Generierung von Routenplänen für wenigstens eine autonome landwirtschaftliche Arbeitsmaschine oder mehrere autonome landwirtschaftliche Arbeitsmaschinen ausgebildet und/oder programmiert.

Ein elektronischer Datenaustausch kann durch eine und/oder mehrere kommunizierende Verbindungen zwischen zwei und oder mehreren Komponenten des Assistenzsystems ausgebildet sein. Das Assistenzsystem kann dazu ausgebildet und/oder programmiert sein, über den elektronischen Datenaustausch Daten für eine und/oder mehrere autonome landwirtschaftliche Arbeitsmaschinen bereitzustellen, sodass die eine und/oder die mehreren autonomen landwirtschaftlichen Arbeitsmaschinen wenigstens einen Arbeitsschritt oder mehrere Arbeitsschritte eines landwirtschaftlichen Arbeitsablaufs, insbesondere entlang der Fahrrouten des Routenplans, durchführen können. Das Assistenzsystem kann eine Steuereinrichtung einer autonomen landwirtschaftlichen Arbeitsmaschine oder mehrere Steuereinrichtungen mehrerer autonomer landwirtschaftlicher Arbeitsmaschinen umfassen. Eine solche Steuereinrichtung einer autonomen landwirtschaftlichen Arbeitsmaschine kann zur Ansteuerung der autonomen landwirtschaftlichen Arbeitsmaschine, insbesondere wenigstens einer Komponente der autonomen landwirtschaftlichen Arbeitsmaschine, ausgebildet und/oder programmiert sein.

Unter einer kommunizierenden Verbindung kann hier zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung, insbesondere bei mehr als zwei Komponenten, kann ein Bussystem ausbilden. Ferner können diese miteinander kommunizierend verbundenen Komponenten eine kabelgebundene und/oder drahtlose Datenverbindung ausbilden.

Das erfindungsgemäße Assistenzsystem ist dazu ausgebildet und/oder programmiert, für eine oder mehrere autonome landwirtschaftliche Arbeitsmaschinen einen Routenplan mit Fahrrouten entlang eines landwirtschaftlichen Feldes zu generieren, um ein auf diesem landwirtschaftlichen Feld ausgebildetes Gut zu ernten, wobei die Fahrrouten des Routenplans Qualitätskriterien des zu erntenden Gutes berücksichtigen. Mit anderen Worten ausgedrückt, kann das Assistenzsystem dazu ausgebildet und/oder programmiert sein, eine Qualitätsprüfung des zu erntenden Gutes bezüglich eines oder mehrerer Qualitätskriterien durchzuführen und/oder einzubeziehen, um die Fahrrouten des Routenplans in Abhängigkeit eines oder mehrerer Qualitätswerte des zu erntenden Gutes zu generieren. Die Fahrrouten des Routenplans können abschnittsweise geradlinig und/oder abschnittsweise ungerade, insbesondere gekrümmt, ausgebildet sein.

Da sich beispielsweise in landwirtschaftlichen Feldern aufgrund von Umweltbedingungen hochwertige Bereiche mit zu erntendem Gut, welches eine hohe Qualitätswertung aufweist, und minderwertige Bereiche mit zu erntendem Gut, welches eine niedrige Qualitätswertung aufweist, ausbilden, ermöglicht das erfindungsgemäße Assistenzsystem eine optimale, insbesondere qualitätsoptimierte und/oder kostenoptimierte, Ernte des zu erntenden Guts mit wenigstens einer oder mehreren autonomen landwirtschaftlichen Arbeitsmaschinen.

Der Routenplan kann die Anzahl an autonomen landwirtschaftlichen Arbeitsmaschinen und/oder einen Vorschlag für Geschwindigkeit der autonomen landwirtschaftlichen Arbeitsmaschinen und/oder einen Einsatz von Betriebsmitteln und/oder Ortsstellen zum Laden von Energie und/oder Treibstoff und/oder weiteren Betriebsmitteln umfassen.

Erfindungsgemäss ist vorgesehen, dass das Assistenzsystem dazu ausgebildet und/oder programmiert ist, Qualitätswerte, insbesondere einen Feuchtigkeitsgehalt und/oder einen Unkrautgehalt, bezüglich des zu erntenden Gutes zu ermitteln. Das Assistenzsystem kann hierfür beispielsweise wenigstens eine Sensoreinrichtung oder mehrere Sensoreinrichtungen zur Erfassung, insbesondere zur Messung, der Qualität des zu erntenden Gutes, aufweisen. Ferner kann das Assistenzsystem eine Datenbank umfassen, auf der Qualitätswerte des zu erntenden Gutes und/oder Qualitätskriterien des zu erntenden Gutes hinterlegt sind. Ferner kann das Assistenzsystem eine Referenzdatenbank umfassen, auf der beispielsweise historische Qualitätswerte bereits geernteten Gutes des landwirtschaftlichen Feldes und/oder Qualitätskriterien des bereits geernteten Gutes des landwirtschaftlichen Feldes hinterlegt sind.

Weiterhin erfindungsgemäss ist vorgesehen, dass das Assistenzsystem dazu ausgebildet und/oder programmiert ist, die Fahrrouten des Routenplans derart zu generieren, dass ein Teil der Fahrrouten zunächst durch einen Feldbereich führt, der im Vergleich zu anderen Feldbereichen ein zu erntendes Gut aufweist, dessen Qualitätswerte im Vergleich zum zu erntenden Gut der anderen Feldbereiche näherliegend an den Qualitätskriterien sind. Hierdurch kann die Route, insbesondere die Fahrrouten, für die autonomen landwirtschaftlichen Arbeitsmaschinen derart optimiert werden, dass das zu erntende Gut, welches vorteilhafte Qualitätswerte im Vergleich zum restlichen zu erntenden Gut aufweist, als erstes abgeerntet wird und somit einer Veränderung, insbesondere einer Verschlechterung, der Qualitätswerte dieses Gutes, insbesondere durch Umweltbedingungen, entgegengewirkt wird. Nachdem der bezüglich der Qualitätswerte optimalste Feldbereich vollständig abgeerntet wurde, kann es vorgesehen sein, dass unter den restlichen landwirtschaftlichen Feldbereichen derjenige Feldbereich vollständig abgeerntet wird, dessen zu erntendes Gut im Vergleich zum zu erntenden Gut der restlichen Feldbereiche die nunmehr höchsten Qualitätswerte aufweist.

Ferner kann vorgesehen sein, dass das Assistenzsystem dazu ausgebildet und/oder programmiert ist, die Fahrrouten des Routenplans derart zu generieren, dass ein Teil der Fahrrouten zunächst durch einen Feldbereich führt, der im Vergleich zu anderen Feldbereichen, ein zu erntendes Gut aufweist, dessen Qualitätswerte im Vergleich zum zu erntenden Gut der anderen Feldbereiche den Qualitätskriterien entspricht.

Ferner kann vorgesehen sein, dass das Assistenzsystem dazu ausgebildet und/oder programmiert ist, einen Qualitätswert eines zu erntenden Gutes mit wenigstens einem Qualitätskriterium oder mehreren Qualitätskriterien zu vergleichen, wobei der Qualitätswert lediglich als ein das Qualitätskriterium erfüllender Qualitätswert eingestuft wird und somit dem Qualitätskriterium entspricht und/oder das Qualitätskriterium berücksichtigt, wenn der Qualitätswert des zu erntenden Gutes einen Maximalwert überschreitet und/oder ein Minimalwert unterschreitet und/oder innerhalb eines Wertebereichs vorliegt. Folglich berücksichtigen die Fahrrouten des Routenplans die Qualitätskriterien des zu erntenden Gutes.

Bei einer vorteilhaften Weiterbildung der erfindungsgemäßen Lösung ist vorgesehen, dass die Qualitätskriterien des zu erntenden Gutes, welches die Fahrrouten des Routenplans berücksichtigen, einen Feuchtigkeitsgehalt des zu erntenden Gutes betreffen. Hierdurch können beispielsweise die Fahrrouten des Routenplans durch das Assistenzsystem dahingehend optimiert werden, dass das Gut geerntet wird, welches einen guten, insbesondere optimalen, Feuchtigkeitsgehalt aufweist. Hierdurch kann ein energieintensiver und/oder kostenintensiver Trocknungsprozess des geernteten Gutes vermieden werden.

Bei einer vorteilhaften Weiterbildung der erfindungsgemäßen Lösung ist vorgesehen, dass der Feuchtigkeitsgehalt des zu erntenden Gutes als Qualitätskriterium des zu erntenden Gutes kleiner und/oder gleich 14% ist. Hierdurch wird ein energieintensiver und/oder kostenintensiver Trocknungsprozess des geernteten Gutes vermieden.

Bei einer vorteilhaften Weiterbildung der erfindungsgemäßen Lösung ist vorgesehen, dass die Qualitätskriterien des zu erntenden Gutes, welches die Fahrrouten des Routenplans berücksichtigen, einen Unkrautgehalt des zu erntenden Gutes betreffen. Hierdurch wird ein energieintensiver und/oder kostenintensiver Reinigungsprozess des geernteten Gutes vermieden.

Bei einer vorteilhaften Weiterbildung der erfindungsgemäßen Lösung ist vorgesehen, dass das Assistenzsystem dazu ausgebildet und/oder programmiert ist, den Routenplan mit den Fahrrouten derart zu generieren, dass ein Überladevorgang eines geernteten Gutes zwischen wenigstens zwei autonomen landwirtschaftlichen Arbeitsmaschinen erfolgt, sodass eine Vermischung von geerntetem Gut, welches unterschiedliche Qualitätswerte aufweist, vermieden wird. Hierdurch wird ein energieintensiver und/oder kostenintensiver Trennungsprozess zur Trennung des geernteten Gutes bezüglich des Qualitätskriteriums vermieden.

Bei einer vorteilhaften Weiterbildung der erfindungsgemäßen Lösung ist vorgesehen, dass das Assistenzsystem dazu ausgebildet und/oder programmiert ist, wenigstens einer autonomen landwirtschaftlichen Arbeitsmaschine den Routenplan mit Fahrrouten zu übermitteln, und einen Arbeitsbetrieb der autonomen landwirtschaftlichen Arbeitsmaschine während eines Erntevorganges, in dem das zu erntende Gut von der autonomen landwirtschaftlichen Arbeitsmaschine mittels einem Arbeitsaggregat geerntet wird, zumindest teilweise zu steuern und den Arbeitsbetrieb der autonomen landwirtschaftlichen Arbeitsmaschine zu überwachen. Hierfür kann das Assistenzsystem beispielsweise mittels einem elektronischen Datenaustausch, insbesondere kommunizierend, mit einer Steuereinrichtung einer oder mehreren autonomen landwirtschaftlichen Arbeitsmaschinen verbunden sein.

Bei einer vorteilhaften Weiterbildung der erfindungsgemäßen Lösung ist vorgesehen, dass das Assistenzsystem zur Ausführung der folgenden Schritte zur Erzeugung von Daten zur Steuerung wenigstens einer autonomen landwirtschaftlichen Arbeitsmaschine entlang des Routenplans mit den Fahrrouten ausgebildet und/oder programmiert ist: Generieren eines digitalen Abbilds eines zu bearbeitenden landwirtschaftlichen Feldes, auf den sich der Routenplan mit den Fahrrouten bezieht, umfassend Qualitätswerte des zu erntenden Gutes durch eine Verarbeitungseinrichtung und Speichern des digitalen Abbilds des zu bearbeitenden landwirtschaftlichen Feldes in einer mit der Verarbeitungseinrichtung zur Übertragung von Daten verbundenen, insbesondere kommunizierend verbundenen, Datenbank. Ferner ist das Assistenzsystem ausgebildet und/oder programmiert, ein digitales Abbild der autonomen landwirtschaftlichen Arbeitsmaschine durch die Verarbeitungseinrichtung zu generieren und dieses digitale Abbild der autonomen landwirtschaftlichen Arbeitsmaschine in der Datenbank zu speichern. Ferner ist das Assistenzsystem ausgebildet und/oder programmiert, mindestens einen Arbeitsschritt einer Abfolge an Arbeitsschritten umfassenden landwirtschaftlichen Arbeitsablaufs bezüglich des Routenplans mit Fahrrouten anhand des digitalen Abbilds des zu bearbeitenden landwirtschaftlichen Feldes unter Anwendung eines Simulationsalgorithmus durch die Verarbeitungseinrichtung zu simulieren, wobei aus dem digitalen Abbild der autonomen landwirtschaftlichen Arbeitsmaschine Daten abgeleitet werden, die als Randbedingungen in der Simulation verwendet werden und wobei zusätzlich die Qualitätskriterien des zu erntenden Gutes als Randbedingungen in der Simulation verwendet werden, und wobei als Ausgangsgröße der Simulation eine Anweisung zur Durchführung des Arbeitsschrittes durch die autonome landwirtschaftliche Arbeitsmaschine erzeugt wird. Ferner ist das Assistenzsystem dazu ausgebildet und/oder programmiert, als Ausgangsgröße der Simulation erzeugten Anweisung an eine Steuereinrichtung der autonomen landwirtschaftlichen Arbeitsmaschine zu übermitteln und eine Ausführung der Anweisung durch die Steuereinrichtung der autonomen landwirtschaftlichen Arbeitsmaschine zu bewirken.

Die Simulation kann eine Simulation von Fahrrouten, Abladepunkten, Maschinendaten und/oder Maschinen-Einstellungen anhand vorliegenden Daten umfassen.

Das Assistenzsystem kann wenigstens eine Verarbeitungseinrichtung und/oder wenigstens eine Datenbank und/oder wenigstens Referenzdatenbank aufweisen, die insbesondere dazu gebildet und/oder programmiert sind, bei den zuvor angeführten und/oder den nachfolgend angeführten Schritten mitzuwirken. Die Verarbeitungseinrichtung und/oder die Datenbank und/oder die Referenzdatenbank können kommunizierend miteinander verbunden sein.

Mittels des Assistenzsystems ist es demnach möglich, die Durchführung eines Arbeitsschrittes einer Abfolge an Arbeitsschritten umfassenden Arbeitsablaufs virtuell ablaufen zu lassen, bevor die eigentliche reale Durchführung auf dem landwirtschaftlichen Feld erfolgt. In den Modellbildungsschritten werden digitale Zwillinge sowohl des zu bearbeitenden landwirtschaftlichen Feldes und zu erntenden Gutes, insbesondere der Qualitätswerte des zu erntenden Gutes, als auch der autonomen landwirtschaftlichen Arbeitsmaschine ausgebildet, anhand derer die Durchführung des Arbeitsschrittes im Simulationsschritt simuliert wird. Der Vorteil der Nutzung von digitalen Zwillingen liegt darin, dass ein nahezu identisches Abbild der realen landwirtschaftlichen Felder und des zu erntenden Gutes als auch der autonomen landwirtschaftlichen Arbeitsmaschinen digitalisiert vorliegt, in denen sämtliche für die Durchführung eines Arbeitsschrittes notwendigen Parameter hinterlegt sind. Mit anderen Worten ausgedrückt, stellen die digitalen Abbilder des landwirtschaftlichen Feldes und des zu erntenden Gutes und der autonomen landwirtschaftlichen Arbeitsmaschine eine im Wesentlichen exakte Kopie des realen landwirtschaftlichen Feldes und des realen zu erntenden Gutes und der realen autonomen landwirtschaftlichen Arbeitsmaschine dar.

Anhand der Simulation des Arbeitsschrittes, die auf dem digitalen Abbild des zu bearbeitenden landwirtschaftlichen Feldes basiert und die aus dem digitalen Abbild der autonomen landwirtschaftlichen Arbeitsmaschine abgeleiteten Daten als auch die Qualitätskriterien des zu erntenden Gutes als Randbedingungen nutzt, kann ein vorzunehmender Arbeitsschritt auf dem zu bearbeitenden landwirtschaftlichen Feld vorab äußerst präzise simuliert werden, wobei als Ausgangsgröße der Simulation Anweisungen erzeugt werden, die die autonome landwirtschaftliche Arbeitsmaschine dazu befähigen, den vorab simulierten Arbeitsschritt anschließend in der Realität entsprechend der Simulation durchzuführen. Mit anderen Worten ausgedrückt, wird durch die Simulation, die die digitalen Abbilder des zu bearbeitenden landwirtschaftlichen Feldes und des zu erntenden Gutes und der autonomen landwirtschaftlichen Arbeitsmaschine berücksichtigt, die die an und für sich "unwissende" autonome landwirtschaftliche Arbeitsmaschine mit der Fähigkeit ausstattet, den Arbeitsschritt selbsttätig, also autonom ohne einen Bediener auf oder in der Nähe der autonomen landwirtschaftlichen Arbeitsmaschine, durchzuführen. Anhand der Anweisung kann die Steuereinrichtung demnach die einzelnen Arbeitsaggregate der autonomen landwirtschaftlichen Arbeitsmaschine und/oder an die autonome landwirtschaftliche Arbeitsmaschine adaptierte Arbeitsaggregate entsprechend der Simulation ansteuern, so dass der vorab simulierte Arbeitsschritt auf dem zu bearbeitenden landwirtschaftlichen Feld von der autonomen landwirtschaftlichen Arbeitsmaschine durchgeführt wird.

Als Simulationsalgorithmus kann ein geeigneter Algorithmus eingesetzt werden, der die Eingangsgrößen und Randbedingungen der Simulation derart miteinander wechselwirkend verknüpft, dass die Durchführung des Arbeitsschrittes durch die autonome landwirtschaftliche Arbeitsmaschine mit einer derartigen Präzision simuliert werden kann, dass bis auf situationsbedingte unvorhersehbare Ereignisse vor Ort während der Durchführung des Arbeitsschrittes keine Abweichungen zwischen der simulierten und der realen Durchführung des Arbeitsschrittes auftreten, die zu Unregelmäßigkeiten während des Betriebs der autonomen landwirtschaftlichen Arbeitsmaschine während der realen Durchführung des Arbeitsschrittes führen könnten. Insbesondere ist der Simulationsalgorithmus ein lernfähiger Simulationsalgorithmus, also ein Simulationsalgorithmus, der auf einer künstlichen Intelligenz, vorzugsweise einem künstlichen neuronalen Netz, basiert. Der lernfähige Simulationsalgorithmus wird vor der Durchführung einer ersten verfahrensgemäßen Simulation mittels eines Initialdatensatzes trainiert. Die in die Simulation fließenden Eingangsgrößen und Randbedingungen sowie die durch die Simulation erhaltenen Ausgangsgrößen können zum weiteren Trainieren des Simulationsalgorithmus verwendet werden.

Bei einer vorteilhaften Weiterbildung der erfindungsgemäßen Lösung ist vorgesehen, dass die Verarbeitungseinrichtung dazu ausgebildet und/oder programmiert ist, zum Generieren des digitalen Abbilds des zu bearbeitenden landwirtschaftlichen Feldes auf Referenzdaten zuzugreifen, wobei die Referenzdaten agronomische Daten, insbesondere Bodendaten, Bestandsdaten, Ertragsdaten und/oder Felddaten, Geodaten und/oder Wetterdaten und/oder Qualitätskriterien und/oder Qualitätswerte, insbesondere ein Feuchtigkeitsgehalt des zu erntenden Gutes und/oder ein Unkrautgehalt des zu erntenden Gutes, sind, wobei die Referenzdaten in der Datenbank und/oder in einer von der Datenbank unabhängigen Referenzdatenbank hinterlegt sind und die Verarbeitungseinrichtung mit der Referenzdatenbank zur Übertragung von Daten verbunden, insbesondere kommunizierend verbunden, ist.

Die Verwendung von Referenzdaten zur Erzeugung des digitalen Abbilds der zu bearbeitenden landwirtschaftlichen Feldes sorgt dafür, dass das reale landwirtschaftliche Feld, das bearbeitet werden soll, im Wesentlichen exakt durch den digitalen Zwilling abgebildet ist. Da die Simulation des Arbeitsschrittes auf dem digitalen Zwilling des zu bearbeitenden landwirtschaftlichen Feldes basiert, wird durch die Nutzung der Referenzdaten zur Erzeugung des digitalen Abbilds die gesamte Simulation erheblich verbessert.

Bei einer vorteilhaften Weiterbildung der erfindungsgemäßen Lösung ist vorgesehen, dass die Verarbeitungseinrichtung dazu ausgebildet und/oder programmiert ist, zum Generieren des digitalen Abbilds der autonomen landwirtschaftlichen Arbeitsmaschine auf Daten der autonomen landwirtschaftlichen Arbeitsmaschine, insbesondere Geometriedaten, Betriebszustandsdaten und/oder Ausstattungsdaten der autonomen landwirtschaftlichen Arbeitsmaschine, zuzugreifen.

Entsprechend der Verwendung von Referenzdaten zum Erzeugen des digitalen Abbilds des zu bearbeitenden landwirtschaftlichen Feldes sorgt der Zugriff auf Daten der autonomen landwirtschaftlichen Arbeitsmaschine durch die Verarbeitungseinrichtung zum Erzeugen des digitalen Abbilds der autonomen landwirtschaftlichen Arbeitsmaschine dafür, dass die reale autonome landwirtschaftliche Arbeitsmaschine, die zur Bearbeitung des landwirtschaftlichen Feldes genutzt werden soll, im Wesentlichen exakt durch den digitalen Zwilling abgebildet ist. Da die Simulation des Arbeitsschrittes Daten, die aus dem digitalen Zwilling der autonomen landwirtschaftlichen Arbeitsmaschine abgeleitet werden, als Randbedingungen berücksichtigt, wird durch die Nutzung der Daten der autonomen landwirtschaftlichen Arbeitsmaschine zum Erzeugen des digitalen Abbilds die gesamte Simulation erheblich verbessert.

Bei einer vorteilhaften Weiterbildung der erfindungsgemäßen Lösung ist vorgesehen, dass die Verarbeitungseinrichtung zur Ausführung des folgenden Schrittes ausgebildet und/oder programmiert ist: Generieren eines digitalen Abbilds eines an die autonome landwirtschaftliche Arbeitsmaschine adaptierbaren Arbeitsaggregats durch die Verarbeitungseinrichtung und Speichern des digitalen Abbilds des Arbeitsaggregats in der Datenbank.

Insbesondere werden aus dem digitalen Abbild des an die autonome landwirtschaftliche Arbeitsmaschine adaptierbaren Arbeitsaggregats Daten abgeleitet, die als Randbedingungen in der Simulation verwendet werden.

Das Erzeugen eines digitalen Abbilds eines an die autonome landwirtschaftliche Arbeitsmaschine adaptierbaren Arbeitsaggregats sowie das Ableiten von Daten aus diesem digitalen Abbild, die als Randbedingungen in der Simulation verwendet werden, sorgt dafür, dass die Durchführung einer Vielzahl an Arbeitsschritten, von denen einige an die autonome landwirtschaftliche Arbeitsmaschine adaptierte Arbeitsaggregate benötigen, von der Verarbeitungseinrichtung präzise simuliert werden kann. Die an die Steuereinrichtung der autonomen landwirtschaftlichen Arbeitsmaschine übermittelte Anweisung sorgt dann gleichermaßen dafür, dass die Steuereinrichtung auch die an die autonome landwirtschaftliche Arbeitsmaschine adaptierten Arbeitsaggregate entsprechend der simulierten Durchführung des Arbeitsschrittes ansteuern kann.

Bei einer vorteilhaften Weiterbildung der erfindungsgemäßen Lösung ist vorgesehen, dass die Verarbeitungseinrichtung dazu ausgebildet und/oder programmiert ist, dass mindestens ein Optimierungsziel, insbesondere wenigstens ein Qualitätskriterium des zu erntenden Gutes, nutzerspezifisch vorgegeben wird, wobei das mindestens eine Optimierungsziel als Randbedingung in der Simulation verwendet wird.

Die Verwendung von Optimierungszielen, insbesondere eines Qualitätskriteriums des zu erntenden Gutes, als Randbedingung in der Simulation sorgt dafür, dass die Durchführung des Arbeitsschrittes im Hinblick auf eine spezifische durch den Nutzer, beispielsweise einen Landwirt, dem das zu bearbeitende landwirtschaftliche Feld und/oder die autonome landwirtschaftliche Arbeitsmaschine gehört, festlegbare Zielsetzung hin simuliert werden kann. Wird beispielsweise ein Optimierungsziel betreffend die Bodenschonung durch den Nutzer gewählt, so wird die an die Steuereinrichtung übermittelte Anweisung anders aussehen als würde ein Optimierungsziel betreffend den Durchsatz und/oder die Bearbeitungszeit gewählt. Es ist auch möglich, dass der Nutzer mehrere Optimierungsziele gewichtet vorgibt, sodass anteilig verschiedene Zielsetzungen in der Simulation der Durchführung des Arbeitsschrittes berücksichtigt werden und eine diese verschieden gewichteten Zielsetzungen berücksichtigende Anweisung als Ausgangsgröße der Simulation erzeugt wird, die dann von der Steuereinrichtung der autonomen landwirtschaftlichen Arbeitsmaschine zur Ansteuerung derselben während der realen Durchführung des Arbeitsschrittes dient.

Bei einer vorteilhaften Weiterbildung der erfindungsgemäßen Lösung ist vorgesehen, dass das Assistenzsystem dazu ausgebildet und/oder programmiert ist, mittels wenigstens einer Sensoreinrichtung während der Durchführung des Arbeitsschrittes durch die autonome landwirtschaftliche Arbeitsmaschine Echtzeitdaten zu generieren, die Betriebsparameter und/oder Umgebungsparameter der autonomen landwirtschaftlichen Arbeitsmaschine repräsentieren, und/oder dass das Assistenzsystem dazu ausgebildet und/oder programmiert ist, mittels wenigstens einer Sensoreinrichtung während der Durchführung des Arbeitsschrittes durch die autonome landwirtschaftliche Arbeitsmaschine Echtzeitdaten bezüglich des zu bearbeitenden Feldes, insbesondere des zu erntenden Gutes, zu generieren, wobei das Assistenzsystem dazu ausgebildet und/oder programmiert ist, aus den Echtzeitdaten bezüglich des zu bearbeitenden Feldes, insbesondere des zu erntenden Gutes, die Qualitätswerte des zu erntenden Gutes zu ermitteln.

Das Assistenzsystem kann zusätzlich oder alternativ wenigstens eine Sensoreinrichtung zur Erfassung von Betriebsparametern und/oder Umgebungsparametern der autonomen landwirtschaftlichen Arbeitsmaschine aufweisen. Diese Sensoreinrichtung kann kommunizierend mit der Verarbeitungseinrichtung und/oder der Datenbank und/oder der Referenzdatenbank verbunden sein. Diese Qualitätswerte der Sensoreinrichtung können von der Verarbeitungseinrichtung zur Generierung des digitalen Abbilds des zu bearbeitenden landwirtschaftlichen Feldes genutzt werden.

Das Assistenzsystem kann zusätzlich oder alternativ wenigstens eine Sensoreinrichtung zur Erfassung von Qualitätswerten des zu erntenden Gutes des zu bearbeitenden Feldes aufweisen. Diese Sensoreinrichtung kann kommunizierend mit der Verarbeitungseinrichtung und/oder der Datenbank und/oder der Referenzdatenbank verbunden sein. Diese Qualitätswerte der Sensoreinrichtung können von der Verarbeitungseinrichtung zur Generierung des digitalen Abbilds des zu bearbeitenden landwirtschaftlichen Feldes genutzt werden.

Das Assistenzsystem kann zusätzlich oder alternativ wenigstens eine Sensoreinrichtung an der autonomen landwirtschaftlichen Arbeitsmaschine und/oder an dem adaptierbaren/adaptierten Arbeitsaggregat zur Erfassung von Qualitätswerten des zu erntenden Gutes des zu bearbeitenden Feldes aufweisen. Diese Sensoreinrichtung kann kommunizierend mit der Verarbeitungseinrichtung und/oder der Datenbank und/oder der Referenzdatenbank verbunden sein. Diese Sensoreinrichtung an der autonomen landwirtschaftlichen Arbeitsmaschine und/oder an dem adaptierbaren/adaptierten Arbeitsaggregat kann ein NIR-Sensor für eine Nahinfrarotspektroskopie und/oder ein optischer Sensor sein. Diese Qualitätswerte der Sensoreinrichtung können von der Verarbeitungseinrichtung zur Generierung des digitalen Abbilds des zu bearbeitenden landwirtschaftlichen Feldes genutzt werden.

Das Assistenzsystem kann zusätzlich oder alternativ wenigstens eine Sensoreinrichtung innerhalb der autonomen landwirtschaftlichen Arbeitsmaschine und/oder innerhalb des adaptierbaren/adaptierten Arbeitsaggregates zur Erfassung von Qualitätswerten des geernteten Gutes aufweisen. Diese Sensoreinrichtung kann kommunizierend mit der Verarbeitungseinrichtung und/oder der Datenbank und/oder der Referenzdatenbank verbunden sein. Diese Sensoreinrichtung innerhalb der autonomen landwirtschaftlichen Arbeitsmaschine und/oder innerhalb des adaptierbaren/adaptierten Arbeitsaggregates kann ein NIR-Sensor für eine Nahinfrarotspektroskopie und/oder ein optischer Sensor und/oder ein Prallplattensensor, insbesondere ein Quantimeter, sein. Diese Qualitätswerte der Sensoreinrichtung können von der Verarbeitungseinrichtung zur Generierung des digitalen Abbilds des zu bearbeitenden landwirtschaftlichen Feldes genutzt werden.

Das Assistenzsystem kann zusätzlich oder alternativ wenigstens eine Sensoreinrichtung bezüglich der autonomen landwirtschaftlichen Arbeitsmaschine und/oder bezüglich der adaptierbaren/adaptierten Arbeitsaggregat separat ausgebildete und/oder beabstandet angeordnete Sensoreinrichtung zur Erfassung von Qualitätswerten des zu erntenden Gutes des zu bearbeitenden Feldes aufweisen. Diese Sensoreinrichtung kann kommunizierend mit der Verarbeitungseinrichtung und/oder der Datenbank und/oder der Referenzdatenbank verbunden sein. Diese separat ausgebildete und/oder beabstandet angeordnete Sensoreinrichtung zur Erfassung von Qualitätswerten des zu erntenden Gutes kann eine Drohnenvorrichtung und/oder eine Satellitenvorrichtung sein. Diese Qualitätswerte der Sensoreinrichtung können von der Verarbeitungseinrichtung zur Generierung des digitalen Abbilds des zu bearbeitenden landwirtschaftlichen Feldes genutzt werden

Diese Qualitätswerte, die mittels der zuvor angeführten Sensoreinrichtungen ermittelt wurden, können als historische und/oder als Echtzeit-Daten der Verarbeitungseinrichtung zugänglich sein. Hierbei kann es vorgesehen sein, dass Echtzeit-Daten der zuvor angeführten Sensoreinrichtungen ermittelt durch ein Abspeichern in der Datenbank und/oder in der Referenzdatenbank als historische hinterlegt werden.

Bei einer vorteilhaften Weiterbildung der erfindungsgemäßen Lösung ist vorgesehen, dass die Verarbeitungseinrichtung dazu ausgebildet und/oder programmiert ist, als Ausgangsgröße der Simulation eine Anweisung zur Vorbereitung der autonomen landwirtschaftlichen Arbeitsmaschine im Hinblick auf die Durchführung des Arbeitsschrittes zu erzeugen, wobei die Anweisung an eine Person übermittelt wird, der die Anweisung zur Vorbereitung der autonomen landwirtschaftlichen Arbeitsmaschine ausführt.

Insbesondere kann die Anweisung zur Vorbereitung der autonomen landwirtschaftlichen Arbeitsmaschine eine Vorschrift umfassen, die eine Ballastdatierung der autonomen landwirtschaftlichen Arbeitsmaschine definiert, eine Vorschrift, die ein an die autonome landwirtschaftliche Arbeitsmaschine zu adaptieren des Arbeitsaggregat definiert, und/oder eine Vorschrift, die Betriebsmittel definiert, mit denen die autonome landwirtschaftliche Arbeitsmaschine und/oder das an die autonome landwirtschaftliche Arbeitsmaschine zu adaptierende Arbeitsaggregat zu versorgen ist.

Je nach zu bearbeitendem landwirtschaftlichen Feld und hierfür zu nutzender autonomer landwirtschaftlicher Arbeitsmaschine sowie etwaigen Optimierungszielen, die nutzerspezifisch definiert werden, kann als Ausgangsgröße der Simulation durch die Verarbeitungseinrichtung eine zur Vorbereitung der autonomen landwirtschaftlichen Arbeitsmaschine im Hinblick auf die Durchführung des Arbeitsschrittes spezifische Anweisung erstellt werden, die eine oder mehrere verschiedene Vorschriften enthält, die dann von einer Person, beispielsweise dem Landwirt, dem das zu bearbeitende landwirtschaftliche Feld und/oder die autonome landwirtschaftliche Arbeitsmaschine gehört, als vorbereitende reale Maßnahme zur realen Durchführung des Arbeitsschrittes durch die autonome landwirtschaftliche Arbeitsmaschine ausgeführt wird, um die autonome landwirtschaftliche Arbeitsmaschine selbst, entsprechende Arbeitsaggregate der autonomen landwirtschaftlichen Arbeitsmaschine und/oder an die autonome landwirtschaftliche Arbeitsmaschine adaptierte Arbeitsaggregate entsprechend so vorzubereiten, dass die simulierte Durchführung des Arbeitsschrittes auch in der Realität durch die autonome landwirtschaftliche Arbeitsmaschine umgesetzt werden kann.

Weitere wichtige Merkmale und Vorteile der Erfindung ergeben sich aus den Unter-ansprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: ein auf elektronischem Datenaustausch basierendes Assistenzsystem zur Generierung von Routenplänen, und
- Fig. 2: eine autonome landwirtschaftliche Arbeitsmaschine während der Ernte entlang einer Route, und
- Fig. 3: ermittelte Qualitätswerte des landwirtschaftlichen Feldes entlang der Route der Fig. 2, und
- Fig. 4: einen ersten Teilbereich einer mittels des Assistenzsystems optimierten Route, und
- Fig. 5: einen zweiten Teilbereich einer mittels des Assistenzsystems optimierten Route.

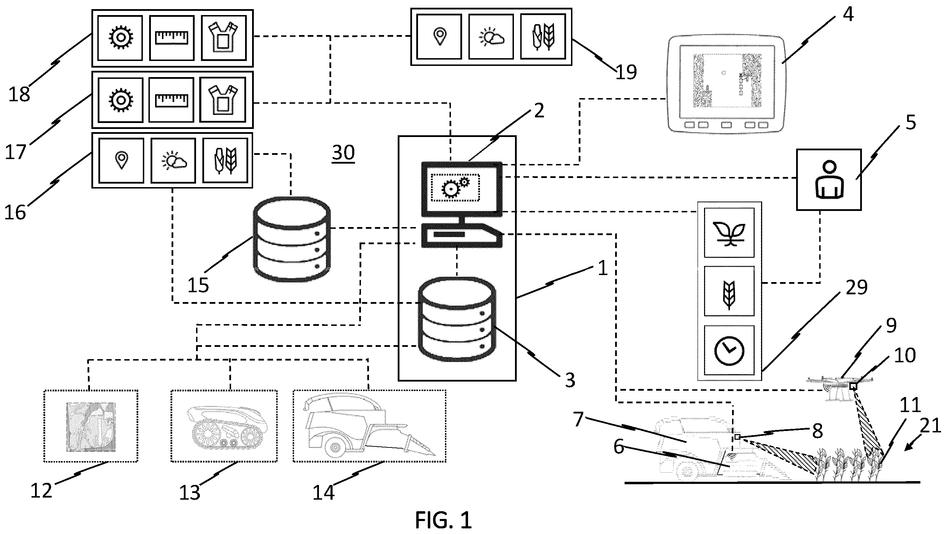

Fig. 1 zeigt ein Assistenzsystem 30 mit einem datenbankbasierten Verwaltungssystem 1, das eine Verarbeitungseinrichtung 2 und eine mit dieser zur Übertragung von Daten verbundene Datenbank 3 umfasst. Die Datenbank 3 kann als zentrale Datenbank 3 oder aber als dezentrale, also verteilte, Datenbank 3 ausgebildet sein. Ist die Datenbank 3 als dezentrale Datenbank 3 ausgebildet, so ist sie vorzugsweise als Blockchain-Datenbank 3 ausgebildet. Auch ist es möglich, dass die Datenbank 3 als cloudbasierte Datenbank 3 implementiert ist. Mit der Verarbeitungseinrichtung 2 kann zudem eine Anzeigeeinrichtung 4 verbunden sein, die entweder Teil des Verwaltungssystems 1 oder unabhängig von dem Verwaltungssystem 1 ist. Die Anzeigeeinrichtung 4 ist dazu eingerichtet, verschiedene von der Verarbeitungseinrichtung 2 erzeugte oder übermittelte grafische Darstellungen einem Nutzer 5 des Verwaltungssystems 1, beispielsweise einem Landwirt, dem eine oder mehrere autonome landwirtschaftliche Arbeitsmaschinen 6, eine oder mehrere daran möglicherweise adaptierte Arbeitsaggregate 7 und/oder eine oder mehrere landwirtschaftliche Felder, auf denen ein landwirtschaftlicher Arbeitsablauf mit einer Abfolge an Arbeitsschritten durchgeführt werden soll, gehört, anzuzeigen. Die Verarbeitungseinrichtung 2 kann weiterhin mit einer sogenannten Referenzdatenbank 15 zur Übertragung von Daten verbunden sein, in der sogenannte Referenzdaten 16 hinterlegt sein können, auf die die Verarbeitungseinrichtung 2 zugreifen kann. Die Einrichtungen, Vorrichtungen und/oder Einheiten 1, 2, 3, 4, 6, 7, 8, 9, 10 und/oder 15 können miteinander zur Übertragung von Daten kabelgebunden und/oder drahtlos kommunizierend verbunden sein.

Wie bereits eingangs angedeutet, sind für die Steuerung von autonomen landwirtschaftlichen Arbeitsmaschinen 6 keine Bediener vorgesehen, die Kenntnisse über einen auszuführenden landwirtschaftlichen Arbeitsablauf mit einer Abfolge an Arbeitsschritten haben. Vielmehr sind die autonomen landwirtschaftlichen Arbeitsmaschinen 6 an und für sich erst einmal "unwissend", also nicht dazu in der Lage einen oder mehrere spezifische Arbeitsschritte der Abfolge von Arbeitsschritten selbsttätig, also autonom, auszuführen. Mit anderen Worten ausgedrückt, solange die autonomen landwirtschaftlichen Arbeitsmaschinen 6 keine Anweisungen erlangen, die sie dazu befähigen, den Arbeitsschritt oder die Arbeitsschritte des Arbeitsablaufs durchzuführen, sind diese hierzu nicht in der Lage. Damit die autonomen landwirtschaftlichen Arbeitsmaschinen 6 in der Lage sind, einen Arbeitsschritt autonom auszuführen, werden demnach Anweisungen erzeugt, die an die autonomen landwirtschaftlichen Arbeitsmaschinen 6 übermittelt werden, so dass diese einen Arbeitsschritt auf einem zu bearbeitenden landwirtschaftlichen Feld 21 selbsttätig, also autonom, durchführen können.

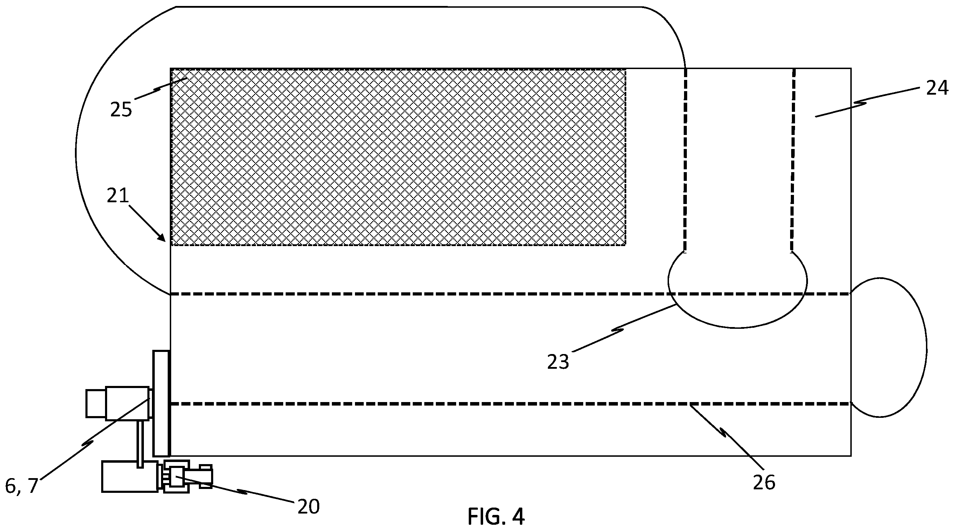

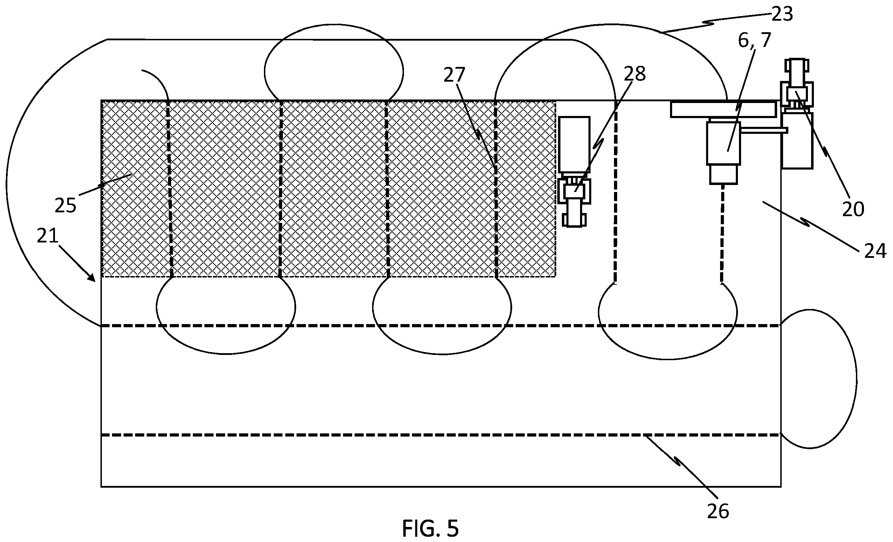

Das auf elektronischem Datenaustausch basierende Assistenzsystem 30, insbesondere das datenbankbasierte Verwaltungssystem 1 des Assistenzsystems 30, ist dazu ausgebildet und/oder programmiert, für eine oder mehrere autonome landwirtschaftliche Arbeitsmaschinen 6 einen Routenplan mit Fahrrouten 26 und/oder 27 entlang eines landwirtschaftlichen Feldes 21 zu generieren, um ein auf diesem landwirtschaftlichen Feld 21 ausgebildetes Gut 11 zu ernten, wobei die Fahrrouten 26 und/oder 27 des Routenplans Qualitätskriterien des zu erntenden Gutes 11 berücksichtigen. Diese Fahrrouten 26 und/oder 27 sind beispielhaft in den Fig. 4 und Fig. 5 dargestellt und können abschnittsweise geradlinig und/oder abschnittsweise ungerade, insbesondere gekrümmt, ausgebildet sein. Insbesondere können Vorgewende 23 teilweise gekrümmte Fahrroutenabschnitte ausbilden.

Das Assistenzsystem 30, insbesondere das datenbankbasierte Verwaltungssystem 1 des Assistenzsystems 30, ist dazu ausgebildet und/oder programmiert, Qualitätswerte, insbesondere einen Feuchtigkeitsgehalt und/oder einen Unkrautgehalt, bezüglich des zu erntenden Gutes 11 zu ermitteln. Das Assistenzsystem 30, insbesondere das datenbankbasierte Verwaltungssystem 1 des Assistenzsystems 30, kann hierfür wenigstens eine Sensoreinrichtung 8 und/oder 10 zur Erfassung, insbesondere zur Messung der Qualität des zu erntenden Gutes 11, aufweisen. Während die Sensoreinrichtung 8 am Arbeitsaggregat angeordnet sein kann, kann die weitere Sensoreinrichtung 10 an einer externen Vorrichtung 9 in Form einer Drohnenvorrichtung angeordnet sein. Das Assistenzsystem 30, insbesondere das datenbankbasierte Verwaltungssystem 1 des Assistenzsystems 30, kann dazu ausgebildet und/oder programmiert sein, die von wenigstens einer Sensoreinrichtung 8 oder 10 erfassten Daten, insbesondere Qualitätswerte des zu erntenden Gutes 11, zu erhalten und/oder in Datenbank 3 und/oder der Referenzdatenbank 15 zu speichern.

In der Datenbank 3 können Qualitätswerte des zu erntenden Gutes 11 und/oder Qualitätskriterien des zu erntenden Gutes 11 gespeichert sein. Ferner können in der Referenzdatenbank 15 historische Qualitätswerte bereits geernteten Gutes 11 des landwirtschaftlichen Feldes 21 und/oder Qualitätskriterien des bereits geernteten Gutes 11 des landwirtschaftlichen Feldes 21 hinterlegt sein.

Das Assistenzsystem 30, insbesondere das datenbankbasierte Verwaltungssystem 1 des Assistenzsystems 30, ist dazu ausgebildet und/oder programmiert, die Fahrrouten 26, 27 des Routenplans derart zu generieren, dass ein Teil der Fahrrouten 26 zunächst durch einen Feldbereich 24 führt, der im Vergleich zu anderen Feldbereichen 25, ein zu erntendes Gut 11 aufweist, dessen Qualitätswerte im Vergleich zum zu erntenden Gut 11 der anderen Feldbereiche 25 näherliegend an den Qualitätskriterien sind.

Das Assistenzsystem 30, insbesondere das datenbankbasierte Verwaltungssystem 1 des Assistenzsystems 30, ist dazu ausgebildet und/oder programmiert, wenigstens einer autonomen landwirtschaftlichen Arbeitsmaschine 6 den Routenplan mit Fahrrouten 26, 27 zu übermitteln, und einen Arbeitsbetrieb der autonomen landwirtschaftlichen Arbeitsmaschine 6 während eines Erntevorganges, in dem das zu erntende Gut 11 von der autonomen landwirtschaftlichen Arbeitsmaschine 6 mittels einem Arbeitsaggregat 7 geerntet wird, zumindest teilweise zu steuern und den Arbeitsbetrieb der autonomen landwirtschaftlichen Arbeitsmaschine 6 zu überwachen.

Hierbei kann das Assistenzsystem 30, insbesondere das datenbankbasierte Verwaltungssystem 1 des Assistenzsystems 30, dahingehend ausgebildet und/oder programmiert sein, dass die Qualitätskriterien des zu erntenden Gutes 11, welches die Fahrrouten 26, 27 des Routenplans berücksichtigen, einen Feuchtigkeitsgehalt und/oder einen Unkrautgehalt des zu erntenden Gutes 11 betreffen.

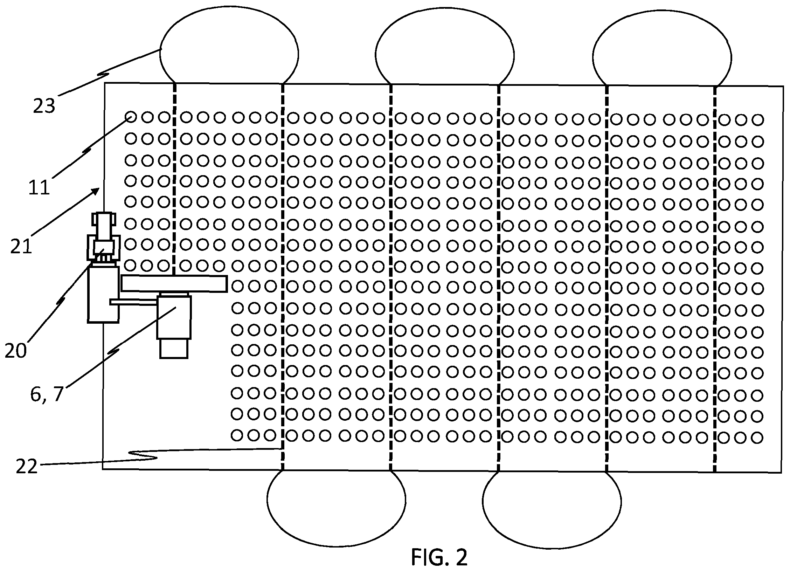

Im Folgenden wird auf die Fig. 2, Fig. 3, Fig. 4 und Fig. 5 Bezug genommen, um die Wirkungsweise des Assistenzsystems 30 der Fig. 1 exemplarisch darzulegen.

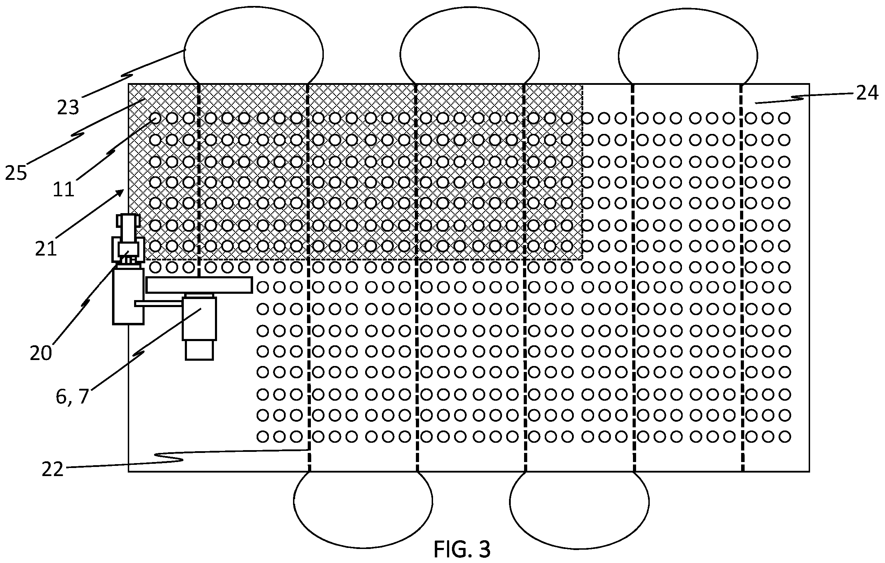

In der Fig. 2 ist ein landwirtschaftliches Feld 21 dargestellt, welches ein zu erntendes Gut 11 aufweist, dass beispielhaft in der Fig. 2 und Fig. 3 mit kreisförmigen Symbolen dargestellt ist. Die autonome landwirtschaftliche Arbeitsmaschine 6 bildet mit dem adaptierten Arbeitsaggregat 7 in den Fig. 2, Fig. 3, Fig. 4 und Fig. 5 eine autonome landwirtschaftliche Erntemaschine, insbesondere beispielsweise einen autonomen landwirtschaftlichen Feldhäcksler, aus. Ferner ist eine weitere autonome landwirtschaftliche Arbeitsmaschine 20 dargestellt, die als adaptiertes Arbeitsaggregat einen Anhänger zur Aufnahme des geernteten Gutes 11 aufweist. Das Assistenzsystem 30, insbesondere das datenbankbasierte Verwaltungssystem 1 des Assistenzsystems 30, ist dazu ausgebildet und/oder programmiert, die beiden autonomen landwirtschaftlichen Arbeitsmaschinen 6 und 20 derart zumindest teilweise zu steuern und zu überwachen, dass die autonome landwirtschaftliche Arbeitsmaschine 6 der Fahrroute 22 folgt und die andere autonome landwirtschaftliche Arbeitsmaschine 20 entsprechend beabstandet der autonome landwirtschaftliche Arbeitsmaschine 6 begleitend folgt, sodass im Wesentlichen kein geerntetes Gut 11 verloren geht.

Beispielhaft wird nun davon ausgegangen, dass der Routenplan mit den Fahrrouten 22 vor Beginn des Erntevorgangs optimal war, jedoch sich beispielsweise aufgrund einer plötzlich geänderten Wetterlage, zum Beispiel insbesondere durch Regenschauer, während des Erntevorgangs dahingehend verändert hat, dass sich im landwirtschaftlichen Feld 21 mehrere Feldbereiche 24 und 25 mit unterschiedlichen Qualitätswerten, insbesondere einem unterschiedlichen Feuchtigkeitsgehalt, ausgebildet haben. Diese unterschiedlichen Feldbereiche 24 und 25 sind beispielhaft in der Fig. 3 angedeutet. Diese unterschiedlichen Feldbereiche 24 und 25 in Form von Daten 19 bezüglich des zu bearbeitenden landwirtschaftlichen Feldes können beispielsweise durch eine Drohneneinheit 9 der Fig. 1 mittels der Sensoreinrichtung 10 erfasst worden sein, wobei die ermittelten Daten bezüglich der Feldbereiche 24 und 25 an das Assistenzsystem 30, insbesondere die Verarbeitungseinrichtung 2, übertragen wurden.

Das Assistenzsystem 30, insbesondere das datenbankbasierte Verwaltungssystem 1 des Assistenzsystems 30, ist dazu ausgebildet und/oder programmiert, die Fahrrouten 26, 27 in den Fig. 4 und 5 des Routenplans derart zu generieren, dass ein Teil der Fahrrouten 26 zunächst durch den Feldbereich 24 führt, der im Vergleich zum anderen Feldbereich 25, ein zu erntendes Gut 11 aufweist, dessen Qualitätswerte im Vergleich zum zu erntenden Gut 11 des anderen Feldbereiches 25 näher an den Qualitätskriterien liegen und/oder diese erfüllen.

Wie in der Fig. 5 dargestellt ist, bewirkt das Assistenzsystem 30, insbesondere das datenbankbasierte Verwaltungssystem 1 des Assistenzsystems 30, dass ein Überladevorgang eines geernteten Gutes 11 zwischen wenigstens zwei autonomen landwirtschaftliche Arbeitsmaschinen 6 und 20 erfolgt, sodass eine Vermischung von geerntetem Gut 11, welches unterschiedliche Qualitätswerte aufweist, vermieden wird. Daher wartet eine weitere autonome landwirtschaftliche Arbeitsmaschine 28 auf die autonome landwirtschaftliche Arbeitsmaschine 6 in der Nähe des zweiten Feldbereiches 25, wohingegen die autonome landwirtschaftliche Arbeitsmaschine 20 das geerntete Gut 11 des ersten Feldbereiches 24 beispielsweise zu einem Gut-Lager transportiert.

Das Assistenzsystem 30, insbesondere das datenbankbasierte Verwaltungssystem 1 des Assistenzsystems 30, ist dazu ausgebildet und/oder programmiert, den Routenplan mit Fahrrouten 26 und/oder 27 an alle autonomen landwirtschaftlichen Arbeitsmaschinen 6, 20, 28 zu übermitteln, und einen Arbeitsbetrieb der autonomen landwirtschaftlichen Arbeitsmaschinen 6, 20, 28 während eines Erntevorganges, in dem das zu erntende Gut 11 von der autonomen landwirtschaftlichen Arbeitsmaschine 6 mittels einem Arbeitsaggregat 7 geerntet wird, zumindest teilweise zu steuern und den Arbeitsbetrieb der autonomen landwirtschaftlichen Arbeitsmaschinen 6, 20, 28 zu überwachen.

Erfindungsgemäß ist nun vorgesehen, dass das Assistenzsystem 30 mittels der Verarbeitungseinrichtung 2 ein digitales Abbild 12 einer von der autonomen landwirtschaftlichen Arbeitsmaschine 6 zu bearbeitenden landwirtschaftlichen Feldes 21 umfassend Qualitätswerte des zu erntenden Gutes 11 generiert bzw. erzeugt und dieses in der mit der Verarbeitungseinrichtung 2 zur Übertragung von Daten verbundenen bzw. kommunizierenden Datenbank 3 gespeichert wird. Weiterhin wird mittels der Verarbeitungseinrichtung 2 ein digitales Abbild 13 einer autonomen landwirtschaftlichen Arbeitsmaschine 6 generiert bzw. erzeugt und dieses ebenfalls in der mit der Verarbeitungseinrichtung 2 zur Übertragung von Daten verbundenen bzw. kommunizierenden Datenbank 3 gespeichert. Sowohl das digitale Abbild 12 des zu bearbeitenden landwirtschaftlichen Feldes als auch das digitale Abbild 13 der autonomen landwirtschaftlichen Arbeitsmaschine 6 stellen jeweils einen sogenannten digitalen Zwilling der realen Strukturen, also dem realen landwirtschaftlichen Feld 21 und der realen autonomen landwirtschaftlichen Arbeitsmaschine 6 dar, der die spezifischen Charakteristika der realen Strukturen im Wesentlichen identisch wiedergibt. Neben den digitalen Abbild 12 des zu bearbeitenden landwirtschaftlichen Feldes und dem digitalen Abbild 13 der autonomen landwirtschaftlichen Arbeitsmaschine 6 kann mittels der Verarbeitungseinrichtung 2 ein weiteres digitales Abbild 14 eines an die autonome landwirtschaftliche Arbeitsmaschine 6 adaptierbaren Arbeitsaggregats 7 generiert bzw. erzeugt werden, welches anschließend ebenfalls in der mit der Verarbeitungseinrichtung 2 zu Übertragung von Daten verbundenen bzw. kommunizierenden Datenbank 3 gespeichert wird. Die digitalen Abbilder 12, 13, 14 können lediglich als digitale Datenmodelle ausgebildet sein, optional aber auch ein dreidimensionales virtuelles Abbild der realen Strukturen umfassen, anhand dessen grafisch die verschiedenen Merkmale dieser Strukturen für den Nutzer 5 sichtbar werden.

Für das Generieren des digitalen Abbilds 12 des zu bearbeitenden landwirtschaftlichen Feldes 21 greift die Verarbeitungseinrichtung 2 auf die bereits zuvor erwähnten Referenzdaten 16 zu, die agronomische Daten, insbesondere Bodendaten, Bestandsdaten, Ertragsdaten und/oder Felddaten, Geodaten und/oder Wetterdaten und/oder Qualitätskriterien und/oder Qualitätswerte, insbesondere ein Feuchtigkeitsgehalt des zu erntenden Gutes 11 und/oder ein Unkrautgehalt des zu erntenden Gutes 11, sind, wobei die Referenzdaten in der Datenbank 3 und/oder in einer von der Datenbank 3 unabhängigen Referenzdatenbank 15 hinterlegt sind und die Verarbeitungseinrichtung 2 mit der Referenzdatenbank 15 zur Übertragung von Daten verbunden, insbesondere kommunizierend verbunden, ist.

Für das Generieren des digitalen Abbilds 13 der autonomen landwirtschaftlichen Arbeitsmaschine 6 greift die Verarbeitungseinrichtung 2 auf Daten 17 der autonomen landwirtschaftlichen Arbeitsmaschine 6 zu. Diese Daten 17 werden insbesondere durch Geometriedaten, Betriebszustandsdaten und/oder Ausstattungsdaten der autonomen landwirtschaftlichen Arbeitsmaschine 6 gebildet. So können die Daten 17 beispielsweise Daten zu den in der autonomen landwirtschaftlichen Arbeitsmaschine 6 vorhandenen Arbeitsaggregaten, Daten zu den Maßen der autonomen landwirtschaftlichen Arbeitsmaschine 6, Daten zu Füllständen von Betriebsmitteln der autonomen landwirtschaftlichen Arbeitsmaschine 6, Daten zu Verschleißzuständen der in der autonomen landwirtschaftlichen Arbeitsmaschine 6 vorhandenen Arbeitsaggregate oder dergleichen umfassen.

Für das Generieren des digitalen Abbilds 18 eines an die autonome landwirtschaftliche Arbeitsmaschine 6 adaptierbaren Arbeitsaggregats 7 greift die Verarbeitungseinrichtung 2 auf Daten 18 des an die autonome landwirtschaftliche Arbeitsmaschine 6 adaptierbaren Arbeitsaggregats 7 zu. Diese Daten 18 werden insbesondere ebenfalls durch Geometriedaten, Betriebszustandsdaten und/oder Ausstattungsdaten des Arbeitsaggregats 7 gebildet. So können die Daten 18 beispielsweise ebenfalls Daten zu den in dem Arbeitsaggregat 7 vorhandenen Komponenten, Daten zu den Maßen des Arbeitsaggregats 7, Daten zu Füllständen von Betriebsmitteln des Arbeitsaggregats 7, Daten zu Verschleißzuständen der in dem Aggregat 7 vorhandenen Komponenten oder dergleichen umfassen.

Um eine Anweisung zu erzeugen, die die autonome landwirtschaftliche Arbeitsmaschine 6 dazu befähigt, einen Arbeitsschritt auf einem landwirtschaftlichen Feld 21 in der Realität durchzuführen, wird mittels der Verarbeitungseinrichtung 2 ein solcher Arbeitsschritt eine Abfolge an Arbeitsschritten umfassenden landwirtschaftlichen Arbeitsablaufs vor der realen Durchführung desselben durch die autonome landwirtschaftliche Arbeitsmaschine 6 zunächst digital simuliert und anschießend die Arbeitsmaschine 6 angesteuert. Der Simulation des Arbeitsschrittes kann weiterhin neben den zuvor erwähnten digitalen Abbildern bzw. den hieraus abgeleiteten Daten mindestens ein Optimierungsziel 29 zugrunde gelegt werden. Ein Strategiewahlverhalten bezüglich des Optimierungsziel 29 durch den Nutzer 5 kann beispielsweise von der Verarbeitungseinrichtung 2 registriert werden und ein Optimierungsziel 29 prognostiziert und für dieses prognostizierte Optimierungsziel einen Optimierungsvorschlag an den Nutzer 5 über die Anzeigevorrichtung 4 übermittelt werden.

### Bezugszeichenliste

- 1: Verwaltungssystem
- 2: Verarbeitungseinrichtung
- 3: Datenbank
- 4: Anzeigeeinrichtung
- 5: Nutzer
- 6: autonome landwirtschaftliche Arbeitsmaschine
- 7: adaptierbares/adaptiertes Arbeitsaggregat
- 8: Sensoreinrichtung
- 9: externe Vorrichtung
- 10: Sensoreinrichtung
- 11: zu erntendes Gut
- 12: digitales Abbild eines zu bearbeitenden landwirtschaftlichen Feldes
- 13: digitales Abbild der autonomen landwirtschaftlichen Arbeitsmaschine
- 14: digitales Abbild eines adaptierbaren Arbeitsaggregats
- 15: Referenzdatenbank
- 16: Referenzdaten
- 17: Daten der autonomen landwirtschaftlichen Arbeitsmaschine
- 18: Daten des adaptierbaren/adaptierten Arbeitsaggregats
- 19: Daten des zu bearbeitenden landwirtschaftlichen Feldes
- 20: weitere landwirtschaftliche Arbeitsmaschine
- 21: landwirtschaftliches Feld
- 22: Fahrroute
- 23: Vorgewende
- 24: erster Feldbereich
- 25: zweiter Feldbereich
- 26: Fahrroute
- 27: Fahrroute
- 28: weitere landwirtschaftliche Arbeitsmaschine
- 29: Optimierungsziel
- 30: Assistenzsystem

## Patentansprüche

1. Auf elektronischem Datenaustausch basierendes Assistenzsystem (30) zur Generierung von Routenplänen,
**dadurch gekennzeichnet,**
- **dass** das Assistenzsystem (30) dazu ausgebildet und/oder programmiert ist, für eine oder mehrere autonome landwirtschaftliche Arbeitsmaschinen (6) einen Routenplan mit Fahrrouten (26, 27) zu generieren,
- wobei die Fahrrouten (26, 27) des Routenplans Qualitätskriterien des zu erntenden Gutes (11) berücksichtigen,
- wobei das Assistenzsystem (30) dazu ausgebildet und/oder programmiert ist, Qualitätswerte, insbesondere einen Feuchtigkeitsgehalt und/oder einen Unkrautgehalt, bezüglich des zu erntenden Gutes (11) zu ermitteln,
- wobei das Assistenzsystem (30) dazu ausgebildet und/oder programmiert ist, die Fahrrouten (26, 27) des Routenplans derart zu generieren, dass ein Teil der Fahrrouten (26) zunächst durch einen Feldbereich (24) führt, der im Vergleich zu anderen Feldbereichen (25), ein zu erntendes Gut (11) aufweist, dessen Qualitätswerte im Vergleich zum zu erntenden Gut (11) der anderen Feldbereiche (25) näherliegend an den Qualitätskriterien sind.

2. Auf elektronischem Datenaustausch basierendes Assistenzsystem (30) zur Generierung von Routenplänen nach Anspruch 1,
**dadurch gekennzeichnet,**
**dass** die Qualitätskriterien des zu erntenden Gutes (11), welches die Fahrrouten (26, 27) des Routenplans berücksichtigen, einen Feuchtigkeitsgehalt des zu erntenden Gutes (11) betreffen.

3. Auf elektronischem Datenaustausch basierendes Assistenzsystem (30) zur Generierung von Routenplänen nach Anspruch 2,
**dadurch gekennzeichnet,**
**dass** der Feuchtigkeitsgehalt des zu erntenden Gutes (11) als Qualitätskriterium des zu erntenden Gutes (11) kleiner und/oder gleich 14% ist.

4. Auf elektronischem Datenaustausch basierendes Assistenzsystem (30) zur Generierung von Routenplänen nach einem der vorhergehenden Ansprüche,
**dadurch gekennzeichnet,**
**dass** die Qualitätskriterien des zu erntenden Gutes (11), welches die Fahrrouten (26, 27) des Routenplans berücksichtigen, einen Unkrautgehalt des zu erntenden Gutes (11) betreffen.

5. Auf elektronischem Datenaustausch basierendes Assistenzsystem (30) zur Generierung von Routenplänen nach einem der vorhergehenden Ansprüche,
**dadurch gekennzeichnet,**
**dass** das Assistenzsystem (30) dazu ausgebildet und/oder programmiert ist, den Routenplan mit den Fahrrouten (26, 27) derart zu generieren, dass ein Überladevorgang eines geernteten Gutes (11) zwischen wenigstens zwei autonomen landwirtschaftlichen Arbeitsmaschinen (6) erfolgt, sodass eine Vermischung von geerntetem Gut (11), welches unterschiedliche Qualitätswerte aufweist, vermieden wird.

6. Auf elektronischem Datenaustausch basierendes Assistenzsystem (30) zur Generierung von Routenplänen nach einem der vorhergehenden Ansprüche,
**dadurch gekennzeichnet,**
**dass** das Assistenzsystem (30) dazu ausgebildet und/oder programmiert ist, wenigstens einer autonomen landwirtschaftlichen Arbeitsmaschine (6) den Routenplan mit Fahrrouten (26, 27) zu übermitteln, und einen Arbeitsbetrieb der autonomen landwirtschaftlichen Arbeitsmaschine (6) während eines Erntevorganges, in dem das zu erntende Gut (11) von der autonomen landwirtschaftlichen Arbeitsmaschine (6) mittels einem Arbeitsaggregat (7) geerntet wird, zumindest teilweise zu steuern und den Arbeitsbetrieb der autonomen landwirtschaftlichen Arbeitsmaschine (6) zu überwachen.

7. Auf elektronischem Datenaustausch basierendes Assistenzsystem (30) zur Generierung von Routenplänen nach einem der vorhergehenden Ansprüche,
**dadurch gekennzeichnet,**
**dass** das Assistenzsystem (30) zur Ausführung der folgenden Schritte zur Erzeugung von Daten zur Steuerung wenigstens einer autonomen landwirtschaftlichen Arbeitsmaschine (6) entlang des Routenplans mit den Fahrrouten (26, 27) ausgebildet und/oder programmiert ist:
- Generieren eines digitalen Abbilds (12) eines zu bearbeitenden landwirtschaftlichen Feldes (21), auf den sich der Routenplan mit den Fahrrouten (26, 27) bezieht, umfassend Qualitätswerte des zu erntenden Gutes (11) durch eine Verarbeitungseinrichtung (2) und Speichern des digitalen Abbilds (10) des zu bearbeitenden landwirtschaftlichen Feldes (21) in einer mit der Verarbeitungseinrichtung (2) zur Übertragung von Daten verbundenen Datenbank (3);
- Generieren eines digitalen Abbilds (13) der autonomen landwirtschaftlichen Arbeitsmaschine (6) durch die Verarbeitungseinrichtung (2) und Speichern des digitalen Abbilds (13) der autonomen landwirtschaftlichen Arbeitsmaschine (6) in der Datenbank (3);
- Simulieren mindestens eines Arbeitsschrittes einer Abfolge an Arbeitsschritten umfassenden landwirtschaftlichen Arbeitsablaufs bezüglich des Routenplans mit Fahrrouten (26, 27) anhand des digitalen Abbilds (12) des zu bearbeitenden landwirtschaftlichen Feldes (21) unter Anwendung eines Simulationsalgorithmus durch die Verarbeitungseinrichtung (2), wobei aus dem digitalen Abbild (11) der autonomen landwirtschaftlichen Arbeitsmaschine (6) Daten abgeleitet werden, die als Randbedingungen in der Simulation verwendet werden, wobei die Qualitätskriterien des zu erntenden Gutes (11) als Randbedingungen in der Simulation verwendet werden, und wobei als Ausgangsgröße der Simulation eine Anweisung zur Durchführung des Arbeitsschrittes durch die autonome landwirtschaftliche Arbeitsmaschine (6) erzeugt wird;
- Übermitteln der als Ausgangsgröße der Simulation erzeugten Anweisung an eine Steuereinrichtung der autonomen landwirtschaftlichen Arbeitsmaschine (6) und Ausführen der Anweisung durch die Steuereinrichtung der autonomen landwirtschaftlichen Arbeitsmaschine (6).

8. Auf elektronischem Datenaustausch basierendes Assistenzsystem (30) zur Generierung von Routenplänen nach Anspruch 7,
**dadurch gekennzeichnet,**
**dass** die Verarbeitungseinrichtung (2) dazu ausgebildet und/oder programmiert ist, zum Generieren des digitalen Abbilds (12) des zu bearbeitenden landwirtschaftlichen Feldes (21) auf Referenzdaten (16) zuzugreifen, wobei die Referenzdaten (16) agronomische Daten, insbesondere Bodendaten, Bestandsdaten, Ertragsdaten und/oder Felddaten, Geodaten und/oder Wetterdaten und/oder Qualitätskriterien und/oder Qualitätswerte, insbesondere ein Feuchtigkeitsgehalt des zu erntenden Gutes (11) und/oder ein Unkrautgehalt des zu erntenden Gutes (11), sind, wobei die Referenzdaten (13) in der Datenbank (3) und/oder in einer von der Datenbank unabhängigen Referenzdatenbank (15) hinterlegt sind und die Verarbeitungseinrichtung (2) mit der Referenzdatenbank (8) zur Übertragung von Daten verbunden ist.

9. Auf elektronischem Datenaustausch basierendes Assistenzsystem (30) zur Generierung von Routenplänen nach Anspruch 7 oder 8,
**dadurch gekennzeichnet,**
**dass** die Verarbeitungseinrichtung (2) dazu ausgebildet und/oder programmiert ist, zum Generieren des digitalen Abbilds (13) der autonomen landwirtschaftlichen Arbeitsmaschine (6) auf Daten (17) der autonomen landwirtschaftlichen Arbeitsmaschine (6), insbesondere Geometriedaten, Betriebszustandsdaten und/oder Ausstattungsdaten der autonomen landwirtschaftlichen Arbeitsmaschine (6), zuzugreifen.

10. Auf elektronischem Datenaustausch basierendes Assistenzsystem (30) zur Generierung von Routenplänen nach einem der Ansprüche 7 bis 9,
**dadurch gekennzeichnet,**
**dass** die Verarbeitungseinrichtung (2) zur Ausführung des folgenden Schrittes ausgebildet und/oder programmiert ist:
- Generieren eines digitalen Abbilds (14) eines an die autonome landwirtschaftliche Arbeitsmaschine adaptierbaren Arbeitsaggregats (7) durch die Verarbeitungseinrichtung (2) und Speichern des digitalen Abbilds (14) des Arbeitsaggregats (7) in der Datenbank (3).

11. Auf elektronischem Datenaustausch basierendes Assistenzsystem (30) zur Generierung von Routenplänen nach einem der Ansprüche 7 bis 10,
**dadurch gekennzeichnet,**
**dass** die Verarbeitungseinrichtung (2) dazu ausgebildet und/oder programmiert ist, dass mindestens ein Optimierungsziel (29), insbesondere wenigstens ein Qualitätskriterium des zu erntenden Gutes (11), nutzerspezifisch vorgegeben wird, wobei das mindestens eine Optimierungsziel (29) als Randbedingung in der Simulation verwendet wird.

12. Auf elektronischem Datenaustausch basierendes Assistenzsystem (30) zur Generierung von Routenplänen nach einem der vorhergehenden Ansprüche,
**dadurch gekennzeichnet,**
- **dass** das Assistenzsystem (30) dazu ausgebildet und/oder programmiert ist, mittels wenigstens einer Sensoreinrichtung (8, 10) während der Durchführung des Arbeitsschrittes durch die autonome landwirtschaftliche Arbeitsmaschine (6) Echtzeitdaten zu generieren, die Betriebsparameter und/oder Umgebungsparameter (19) der autonomen landwirtschaftlichen Arbeitsmaschine (6) repräsentieren, und/oder
- **dass** das Assistenzsystem (30) dazu ausgebildet und/oder programmiert ist, mittels wenigstens einer Sensoreinrichtung (8, 10) während der Durchführung des Arbeitsschrittes durch die autonome landwirtschaftliche Arbeitsmaschine (6) Echtzeitdaten (19) bezüglich des zu bearbeitenden Feldes (21) zu generieren, wobei das Assistenzsystem (30) dazu ausgebildet und/oder programmiert ist, aus den Echtzeitdaten (19) bezüglich des zu bearbeitenden Feldes (21) die Qualitätswerte des zu erntenden Gutes (11) zu ermitteln.

13. Auf elektronischem Datenaustausch basierendes Assistenzsystem (30) zur Generierung von Routenplänen nach einem der Ansprüche 7 bis 12,
**dadurch gekennzeichnet,**
**dass** die Verarbeitungseinrichtung (2) dazu ausgebildet und/oder programmiert ist, als Ausgangsgröße der Simulation eine Anweisung zur Vorbereitung der autonomen landwirtschaftlichen Arbeitsmaschine (6) im Hinblick auf die Durchführung des Arbeitsschrittes zu erzeugen, wobei die Anweisung an eine Person übermittelt wird, die die Anweisung zur Vorbereitung der autonomen landwirtschaftlichen Arbeitsmaschine (6) ausführt.

## Claims

1. Assistance system (30) based on electronic data exchange for generating route plans,
**characterized**
- **in that** the assistance system (30) is designed and/or programmed to generate a route plan with driving routes (26, 27) for one or more autonomous agricultural working machines (6),
- wherein the driving routes (26, 27) of the route plan take account of quality criteria of the crop (11) to be harvested,
- wherein the assistance system (30) is designed and/or programmed to determine quality values, in particular a moisture content and/or a weed content, with respect to the crop (11) to be harvested,
- wherein the assistance system (30) is designed and/or programmed to generate the driving routes (26, 27) of the route plan in such a way that some of the driving routes (26) initially lead through a field region (24) which, in comparison with other field regions (25), has a crop (11) to be harvested, the quality values of which are closer to the quality criteria in comparison with the crop (11) to be harvested in the other field regions (25).

2. Assistance system (30) based on electronic data exchange for generating route plans according to Claim 1,
**characterized**
**in that** the quality criteria of the crop (11) to be harvested, which is taken into account by the driving routes (26, 27) of the route plan, relate to a moisture content of the crop (11) to be harvested.

3. Assistance system (30) based on electronic data exchange for generating route plans according to Claim 2,
**characterized**
**in that** the moisture content of the crop (11) to be harvested as a quality criterion of the crop (11) to be harvested is less than and/or equal to 14%.

4. Assistance system (30) based on electronic data exchange for generating route plans according to one of the preceding claims,
**characterized**
**in that** the quality criteria of the crop (11) to be harvested, which is taken into account by the driving routes (26, 27) of the route plan, relate to a weed content of the crop (11) to be harvested.

5. Assistance system (30) based on electronic data exchange for generating route plans according to one of the preceding claims,
**characterized**
**in that** the assistance system (30) is designed and/or programmed to generate the route plan with the driving routes (26, 27) in such a way that a process of transferring a harvested crop (11) takes place between at least two autonomous agricultural working machines (6), such that a mixing of harvested crop (11), which has different quality values, is avoided.

6. Assistance system (30) based on electronic data exchange for generating route plans according to one of the preceding claims,
**characterized**
**in that** the assistance system (30) is designed and/or programmed to transmit the route plan with driving routes (26, 27) to at least one autonomous agricultural working machine (6), and to at least partially control a working mode of the autonomous agricultural working machine (6) during a harvesting process, in which the crop (11) to be harvested is harvested by the autonomous agricultural working machine (6) by means of a working assembly (7), and to monitor the working mode of the autonomous agricultural working machine (6).

7. Assistance system (30) based on electronic data exchange for generating route plans according to one of the preceding claims,
**characterized**
**in that** the assistance system (30) is designed and/or programmed to carry out the following steps for generating data for controlling at least one autonomous agricultural working machine (6) along the route plan with the driving routes (26, 27):
- generating a digital image (12) of an agricultural field (21) to be worked, to which the route plan with the driving routes (26, 27) relates, comprising quality values of the crop (11) to be harvested, by means of a processing device (2) and storing the digital image (10) of the agricultural field (21) to be worked in a database (3) connected to the processing device (2) for transmitting data;
- generating a digital image (13) of the autonomous agricultural working machine (6) by means of the processing device (2) and storing the digital image (13) of the autonomous agricultural working machine (6) in the database (3);
- simulating at least one working step of an agricultural workflow comprising a sequence of working steps with respect to the route plan with driving routes (26, 27) on the basis of the digital image (12) of the agricultural field (21) to be worked by means of the processing device (2) using a simulation algorithm, wherein data which are used as boundary conditions in the simulation are derived from the digital image (11) of the autonomous agricultural working machine (6), wherein the quality criteria of the crop (11) to be harvested are used as boundary conditions in the simulation, and wherein an instruction for carrying out the working step by means of the autonomous agricultural working machine (6) is generated as an output variable of the simulation;
- transmitting the instruction generated as an output variable of the simulation to a control device of the autonomous agricultural working machine (6) and executing the instruction by means of the control device of the autonomous agricultural working machine (6).

8. Assistance system (30) based on electronic data exchange for generating route plans according to Claim 7,
**characterized**
**in that** the processing device (2) is designed and/or programmed to access reference data (16) for the purpose of generating the digital image (12) of the agricultural field (21) to be worked, wherein the reference data (16) are agronomic data, in particular soil data, stock data, yield data and/or field data, geodata and/or weather data and/or quality criteria and/or quality values, in particular a moisture content of the crop (11) to be harvested and/or a weed content of the crop (11) to be harvested, wherein the reference data (13) are stored in the database (3) and/or in a reference database (15) independent of the database, and the processing device (2) is connected to the reference database (8) for the purpose of transmitting data.

9. Assistance system (30) based on electronic data exchange for generating route plans according to Claim 7 or 8,
**characterized**
**in that** the processing device (2) is designed and/or programmed to access data (17) relating to the autonomous agricultural working machine (6), in particular geometric data, operating state data and/or equipment data relating to the autonomous agricultural working machine (6), in order to generate the digital image (13) of the autonomous agricultural working machine (6).

10. Assistance system (30) based on electronic data exchange for generating route plans according to one of Claims 7 to 9,
**characterized**
**in that** the processing device (2) is designed and/or programmed to carry out the following step:
- generating a digital image (14) of a working assembly (7) adaptable to the autonomous agricultural working machine by means of the processing device (2) and storing the digital image (14) of the working assembly (7) in the database (3).

11. Assistance system (30) based on electronic data exchange for generating route plans according to one of Claims 7 to 10,
**characterized**
**in that** the processing device (2) is designed and/or programmed such that at least one optimization goal (29), in particular at least one quality criterion of the crop (11) to be harvested, is predefined in a user-specific manner, wherein the at least one optimization goal (29) is used as a boundary condition in the simulation.

12. Assistance system (30) based on electronic data exchange for generating route plans according to one of the preceding claims,
**characterized**
- **in that** the assistance system (30) is designed and/or programmed to generate real-time data representing operating parameters and/or environmental parameters (19) of the autonomous agricultural working machine (6) by means of at least one sensor device (8, 10) while the working step is being carried out by the autonomous agricultural working machine (6), and/or
- **in that** the assistance system (30) is designed and/or programmed to generate real-time data (19) relating to the field (21) to be worked by means of at least one sensor device (8, 10) while the working step is being carried out by the autonomous agricultural working machine (6), wherein the assistance system (30) is designed and/or programmed to determine the quality values of the crop (11) to be harvested from the real-time data (19) relating to the field (21) to be worked.

13. Assistance system (30) based on electronic data exchange for generating route plans according to one of Claims 7 to 12,
**characterized**
**in that** the processing device (2) is designed and/or programmed to generate, as an output variable of the simulation, an instruction for preparing the autonomous agricultural working machine (6) with regard to carrying out the working step, wherein the instruction is transmitted to a person who executes the instruction for preparing the autonomous agricultural working machine (6).

## Revendications

1. Système d'assistance(30) basé sur un échange électronique de données pour la génération de plans de route,
**caractérisé**
- **en ce que** le système d'assistance (30) est conçu et/ou programmé pour générer, pour une ou plusieurs machines de travail agricoles autonomes (6), un plan de route avec des itinéraires de déplacement (26, 27),
- les itinéraires de déplacement (26, 27) du plan de route tenant compte de critères de qualité du produit à récolter (11),
- le système d'assistance (30) étant conçu et/ou programmé pour déterminer des valeurs de qualité, en particulier une teneur en humidité et/ou en mauvaises herbes, concernant le produit à récolter (11),
- le système d'assistance (30) étant conçu et/ou programmé pour générer les itinéraires de déplacement (26, 27) du plan de route de telle sorte qu'une partie des itinéraires de déplacement (26) traverse d'abord une zone de champ (24) qui, par rapport à d'autres zones de champ (25), comporte un produit à récolter (11) dont les valeurs de qualité sont plus proches des critères de qualité que le produit à récolter (11) des autres zones de champ (25).

2. Système d'assistance (30) basé sur un échange électronique de données pour la génération de plans de route selon la revendication 1,
**caractérisé**
**en ce que** les critères de qualité du produit à récolter (11), dont tiennent compte les itinéraires de déplacement (26, 27) du plan de route, concernent une teneur en humidité du produit à récolter (11).

3. Système d'assistance (30) basé sur un échange électronique de données pour la génération de plans de route selon la revendication 2,
**caractérisé**
**en ce que** la teneur en humidité du produit à récolter (11), en tant que critère de qualité du produit à récolter (11), est inférieure et/ou égale à 14 %.

4. Système d'assistance (30) basé sur un échange électronique de données pour la génération de plans de route selon l'une des revendications précédentes, **caractérisé**
**en ce que** les critères de qualité du produit à récolter (11), dont tiennent compte les itinéraires de déplacement (26, 27) du plan de route, concernent un taux de mauvaises herbes du produit à récolter (11).

5. Système d'assistance (30) basé sur un échange électronique de données pour la génération de plans de route selon l'une des revendications précédentes, **caractérisé**
**en ce que** le système d'assistance (30) est conçu et/ou programmé pour générer le plan de route avec les itinéraires de déplacement (26, 27) de telle sorte qu'une opération de transfert d'un produit récolté (11) s'effectue entre au moins deux machines de travail agricoles autonomes (6), de manière à éviter un mélange de produits récoltés (11) présentant des valeurs de qualité différentes.

6. Système d'assistance (30) basé sur un échange électronique de données pour la génération de plans de route selon l'une des revendications précédentes, **caractérisé**
**en ce que** le système d'assistance (30) est conçu et/ou programmé pour transmettre à au moins une machine de travail agricole autonome (6) le plan de route avec des itinéraires de déplacement (26, 27), et pour commander au moins en partie un mode de fonctionnement de la machine de travail agricole autonome (6) pendant une opération de récolte lors de laquelle le produit à récolter (11) est récolté par la machine de travail agricole autonome (6) au moyen d'un groupe de travail (7), et pour surveiller le mode de fonctionnement de la machine de travail agricole autonome (6).

7. Système d'assistance (30) basé sur un échange électronique de données pour la génération de plans de route selon l'une des revendications précédentes, **caractérisé**
**en ce que** le système d'assistance (30) est conçu et/ou programmé pour exécuter les étapes suivantes pour la génération de données destinées à commander au moins une machine de travail agricole autonome (6) le long du plan de route avec les itinéraires de déplacement (26, 27) :
- génération, par un dispositif de traitement (2), d'une image numérique (12) d'un champ agricole (21) à travailler, auquel se rapporte le plan de route avec les itinéraires de déplacement (26, 27), comprenant des valeurs de qualité du produit à récolter (11), et stockage de l'image numérique (10) du champ agricole (21) à travailler dans une base de données (3) reliée au dispositif de traitement (2) pour la transmission de données ;
- génération, par le dispositif de traitement (2), d'une image numérique (13) de la machine agricole autonome (6) et stockage de l'image numérique (13) de la machine agricole autonome (6) dans la base de données (3) ;
- simulation, par le dispositif de traitement (2), d'au moins une étape de travail d'un processus de travail agricole comprenant une succession d'étapes de travail par rapport au plan de route avec des itinéraires de déplacement (26, 27) à l'aide de l'image numérique (12) du champ agricole (21) à travailler par application d'un algorithme de simulation, des données étant dérivées de l'image numérique (11) de la machine de travail agricole autonome (6) et utilisées comme conditions aux limites dans la simulation, les critères de qualité du produit à récolter (11) étant utilisés comme conditions aux limites dans la simulation, et une instruction pour l'exécution de l'étape de travail par la machine de travail agricole autonome (6) étant générée en tant que grandeur de sortie de la simulation ;
- transmission de l'instruction générée en tant que grandeur de sortie de la simulation à un dispositif de commande de la machine de travail agricole autonome (6) et exécution de l'instruction par le dispositif de commande de la machine de travail agricole autonome (6).

8. Système d'assistance (30) basé sur un échange électronique de données pour la génération de plans de route selon la revendication 7,
**caractérisé**
**en ce que** le dispositif de traitement (2) est conçu et/ou programmé, aux fins de la génération de l'image numérique (12) du champ agricole (21) à travailler, pour accéder à des données de référence (16), les données de référence (16) étant des données agronomiques, en particulier des données de sol, des données de culture, des données de rendement et/ou des données de champ, des données géographiques et/ou des données météorologiques et/ou des critères de qualité et/ou des valeurs de qualité, en particulier une teneur en humidité du produit à récolter (11) et/ou un taux de mauvaises herbes du produit à récolter (11), les données de référence (13) étant stockées dans la base de données (3) et/ou dans une base de données de référence (15) indépendante de la base de données et le dispositif de traitement (2) étant relié à la base de données de référence (8) pour la transmission de données.

9. Système d'assistance (30) basé sur un échange électronique de données pour la génération de plans de route selon la revendication 7 ou 8,
**caractérisé**
**en ce que** le dispositif de traitement (2) est conçu et/ou programmé, aux fins de la génération de l'image numérique (13) de la machine de travail agricole autonome (6), pour accéder à des données (17) de la machine de travail agricole autonome (6), en particulier des données géométriques des données d'état de fonctionnement et/ou des données d'équipement de la machine de travail agricole autonome (6).

10. Système d'assistance (30) basé sur un échange électronique de données pour la génération de plans de route selon l'une des revendications 7 à 9,
**caractérisé**
**en ce que** le dispositif de traitement (2) est conçu et/ou programmé pour exécuter l'étape suivante :
- génération, par le dispositif de traitement (2), d'une image numérique (14) d'un groupe de travail (7) pouvant être adapté à la machine de travail agricole autonome et stockage de l'image numérique (14) du groupe de travail (7) dans la base de données (3).

11. Système d'assistance (30) basé sur un échange électronique de données pour la génération de plans de route selon l'une des revendications 7 à 10,
**caractérisé**
**en ce que** le dispositif de traitement (2) est conçu et/ou programmé de telle sorte qu'au moins un objectif d'optimisation (29), en particulier au moins un critère de qualité du produit à récolter (11), soit prédéfini de manière spécifique à l'utilisateur, l'au moins un objectif d'optimisation (29) étant utilisé comme condition aux limites dans la simulation.

12. Système d'assistance (30) basé sur un échange électronique de données pour la génération de plans de route selon l'une des revendications précédentes, **caractérisé**
- **en ce que** le système d'assistance (30) est conçu et/ou programmé pour générer, au moyen d'au moins un dispositif capteur (8, 10) pendant l'exécution de l'étape de travail par la machine de travail agricole autonome (6), des données en temps réel représentant des paramètres de fonctionnement et/ou des paramètres d'environnement (19) de la machine de travail agricole autonome (6), et/ou
- **en ce que** le système d'assistance (30) est conçu et/ou programmé pour générer, au moyen d'au moins un dispositif capteur (8, 10) pendant l'exécution de l'étape de travail par la machine de travail agricole autonome (6), des données en temps réel (19) concernant le champ (21) à travailler, le système d'assistance (30) étant conçu et/ou programmé pour déterminer les valeurs de qualité du produit à récolter (11) à partir des données en temps réel (19) concernant le champ (21) à travailler.

13. Système d'assistance (30) basé sur un échange électronique de données pour la génération de plans de route selon l'une des revendications 7 à 12,
**caractérisé**
**en ce que** le dispositif de traitement (2) est conçu et/ou programmé pour générer, en tant que grandeur de sortie de la simulation, une instruction pour la préparation de la machine de travail agricole autonome (6) en vue de l'exécution de l'étape de travail, l'instruction étant transmise à une personne qui exécute l'instruction pour la préparation de la machine de travail agricole autonome (6).
